(19) Europäisches Patentamt
European Patent Office
Office européen des brevets

(11) **EP 4 760 810 A1**

(12) **EUROPEAN PATENT APPLICATION**

(43) Date of publication:
**17.06.2026 Bulletin 2026/25**

(21) Application number: **25217657.3**

(22) Date of filing: **21.11.2025**

(51) International Patent Classification (IPC):
*H01M 4/36* (2006.01)     *H01M 4/58* (2010.01)
*H01M 4/62* (2006.01)     *H01M 4/139* (2010.01)
*H01M 10/0525* (2010.01)

(52) Cooperative Patent Classification (CPC):
**H01M 4/366; H01M 4/139; H01M 4/5825;
H01M 4/625; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.12.2024 JP 2024219682**

(71) Applicant: **Toyota Jidosha Kabushiki Kaisha
Toyota-shi, Aichi-ken 471-8571 (JP)**

(72) Inventor: **MAHARA, Takanori
Toyota-shi, 471-8571 (JP)**

(74) Representative: **Kuhnen & Wacker
Patent- und Rechtsanwaltsbüro PartG mbB
Prinz-Ludwig-Straße 40 A
85354 Freising (DE)**

(54) **CATHODE ACTIVE MATERIAL, BATTERY, AND METHOD FOR PRODUCING CATHODE ACTIVE MATERIAL**

(57) The present disclosure relates to a cathode active material. The cathode active material includes a primary particle (1) and a coating (5). The primary particle (1) includes an olivine phosphate compound. The coating (5) covers at least part of a surface of the primary particle (1). The coating (5) includes carbon. A trifluoromethyl group is detected by X-ray photoelectron spectroscopy.

FIG. 1

EP 4 760 810 A1

**Description**

BACKGROUND OF THE INVENTION

1. Field of the Invention

The present disclosure relates to a cathode active material, a battery, and a method for producing a cathode active material.

2. Description of Related Art

Japanese Unexamined Patent Application Publication No. 2021-9838 (JP 2021-9838 A) discloses a cathode active material including a carbon coating layer formed on the surface of a lithium manganese iron phosphate (hereinafter may be abbreviated to "LMFP") particle.

SUMMARY OF THE INVENTION

To improve battery performance, olivine phosphate compounds such as LMFP, lithium manganese phosphate (LMP), and lithium iron phosphate (LFP) have been developed. In liquid batteries, a trace of mixed water may react with a fluoride such as $LiPF_6$ contained in an electrolyte solution to produce hydrogen fluoride (HF). Contact between the olivine phosphate compound and HF may destroy the crystal structure of the olivine phosphate compound, resulting in a decrease in capacity retention rate.

It is expected that the capacity retention rate can be improved by coating the olivine phosphate compound with the carbon coating layer as described in JP 2021-9838 A. However, there is room for improvement in the capacity retention rate of the battery.

The present disclosure provides a cathode active material, a battery, and a method for producing a cathode active material that are related to improvement in capacity retention rate.

Technical configurations and functions and effects of the present disclosure will be described below. An action mechanism according to the present disclosure includes estimation. The action mechanism does not limit the technical scope of the present disclosure.

A cathode active material according to a first aspect of the present disclosure includes a primary particle and a coating. The primary particle includes an olivine phosphate compound. The coating covers at least part of a surface of the primary particle. The coating includes carbon. A trifluoromethyl group is detected by X-ray photoelectron spectroscopy.

Information on the outermost surface of the measurement target (cathode active material) is obtained by the X-ray photoelectron spectroscopy (XPS). That is, the chemical bonding state of elements measured by the XPS is considered to be the chemical bonding state of elements on the surface of the primary particle or in the coating. The detection of the trifluoromethyl group ($CF_3$ group) by the XPS can be considered to indicate that the coating of the cathode active material includes the $CF_3$ group. The coating generally includes hydroxyl groups (OH groups) derived from the material. The presence of the $CF_3$ group in the coating can be considered to indicate that the coating has relatively few hydroxyl groups. When the number of hydroxyl groups is small, the amount of water adsorbed to the cathode active material is reduced, and deterioration of the cathode active material can be suppressed. As a result, improvement in durability is expected.

In the cathode active material according to the first aspect of the present disclosure, in a Cs1 spectrum obtained by the X-ray photoelectron spectroscopy, in a case where an intensity of a peak corresponding to the trifluoromethyl group is $I(CF_3)$ and an intensity of a peak corresponding to a C-C bond and a C-H bond is $I(C)$, a relationship of formula (1) may be satisfied: $0.01 \leq I(CF_3)/I(C)$ ... (1).

Improvement in durability is expected in a case where the coating includes a certain amount or more of $CF_3$ groups.

In the cathode active material according to the first aspect of the present disclosure, the coating may include the trifluoromethyl group.

In the cathode active material according to the first aspect of the present disclosure, an adsorbed water amount in a case where the cathode active material is left standing for 24 hours in an environment at a temperature of 23°C and a relative humidity of 50% may be 1900 ppm or less.

In the cathode active material according to the first aspect of the present disclosure, a secondary particle may be an aggregate of a plurality of the primary particles.

In the cathode active material according to the first aspect of the present disclosure, the olivine phosphate compound may include at least one selected from the group consisting of lithium manganese iron phosphate, lithium manganese phosphate, and lithium iron phosphate.

In the cathode active material according to the first aspect of the present disclosure, the $I(CF_3)/I(C)$ may be 0.3 or less.

In the cathode active material according to the first aspect of the present disclosure, the $I(CF_3)/I(C)$ may be 0.1 or less.

In the cathode active material according to the first aspect of the present disclosure, the adsorbed water amount may be 1 ppm or more.

In the cathode active material according to the first aspect of the present disclosure, the adsorbed water amount may be 700 ppm or less.

A battery according to a second aspect of the present disclosure may include the cathode active material according to the first aspect.

The battery according to the second aspect of the present disclosure may include a bipolar structure.

A method for producing a cathode active material according to a third aspect of the present disclosure may include preparing a precursor particle, and producing the cathode active material by causing the precursor particle to react with a trifluoromethyl source. The cathode active material may be the cathode active material according to the first aspect.

In the method for producing the cathode active material according to the third aspect of the present disclosure, the trifluoromethyl source may be trifluoroacetic acid.

An embodiment of the present disclosure (hereinafter may be abbreviated to "present embodiment") and an example of the present disclosure (hereinafter may be abbreviated to "present example") will be described. It should be noted, however, that the present embodiment and the present example do not limit the technical scope of the present disclosure. The present embodiment and the present example are exemplary in all respects. The present embodiment and the present example are not limiting. The technical scope of the present disclosure encompasses all changes within the meaning and scope equivalent to the description of the claims. For example, it is anticipated from the beginning that any configurations may be extracted from the present embodiment and arbitrarily combined.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram showing a secondary particle according to an embodiment;
FIG. 2 is a schematic flowchart showing a method for producing a cathode active material according to the embodiment;
FIG. 3 is a schematic perspective view of a battery according to the embodiment;
FIG. 4 is a schematic sectional view taken along line IV-IV in FIG. 3; and
FIG. 5 is a table showing experimental results of Nos. 1 to 4 in examples.

DETAILED DESCRIPTION OF EMBODIMENTS

Terms and Phrases

"Comprise," "include," "have," and variations thereof are open ended expressions. A configuration expressed as open ended may or may not further include additional elements in addition to the required elements. The term "consist of" is a closed ended expression. However, even configurations that are expressed by closed ended terms can include normally-associated impurities and additional elements that are irrelevant to the pertinent technology. The term "substantially consist of" is a semi-closed ended expression. Configurations that are expressed by semi-closed ended terms allow addition of elements that do not substantially affect the basic and novel characteristics of the pertinent technology.

The words such as "may" and "can" are used in a permissive sense, meaning that "it is possible," rather than in a mandatory sense, meaning "must."

The order in which a plurality of steps, actions, operations, etc. included in various methods is performed is not limited to the order described herein unless otherwise specified. For example, a plurality of steps may proceed concurrently. For example, the order of a plurality of steps may be reversed.

The terms "first," "second," etc. are only used to distinguish a plurality of elements. Such terms do not limit the elements to which they are affixed. Such terms are irrelevant to, for example, the order and importance of the elements to which they are affixed.

For example, the phrase "either or both of A and B" includes "A or B" and "A and B." The phrase "either or both of A and B" may also be written as "A and/or B."

Geometric terms are not to be construed in a strict sense. Examples of such geometric terms include "parallel," "perpendicular," and "orthogonal." For example, directions, angles, and distances may relatively vary within a range in which substantially the same or similar functions are obtained. The geometric terms can include tolerances, variations, etc. regarding, for example, designing, working, and manufacturing. There are cases in which dimensional relationships in the drawings do not match actual dimensional relationships. There are cases in which the dimensional relationships in the drawings are changed to facilitate understanding by the reader. There are cases in which the length, width, thickness, etc. are changed. There are cases in which part of configurations are omitted.

Elements described in a "singular form" may also include a plural form unless otherwise specified. For example, a particle may refer to a plurality of particles, an aggregate of particles, or a powdery or granular substance.

The numerical ranges such as "m% to n%" are inclusive ranges including their upper and lower limit values unless otherwise specified. That is, "m% to n%" indicates the numerical range of "m% or more and n% or less." Further, "m% or more and n% or less" includes "more than m% and less than n%." The phrases "equal to or more than" and "equal to or less than" are represented by inequality signs "$\geq$" and "$\leq$" with equal signs. The phrases "more than" and "less than" are represented by inequality signs ">" and "<" without equal signs. A numerical value selected as desired from the numerical range may be set to a new upper limit value or a new lower limit value. For example, a new numerical range may be set by combining as desired a numerical value in the numerical range and a numerical value shown in a different part of the present specification, in a table, in the drawings, etc.

All numerical values should be interpreted as having the term "about" in front of them. The term "about" can mean, for example, $\pm 5\%$, $\pm 3\%$, or $\pm 1\%$. All numerical values can be approximate values that can change depending on the application of the pertinent technology. All numerical values can be expressed in significant figures. Measured values can be average values of measurements that are made multiple times unless otherwise specified. The number of times of measurements may be 3 times or more, 5 times or more, or 10 times or more. Generally, as the number of measurements increases, the reliability of the average value is expected to improve more. Measured values can be rounded off based on the number of digits of the significant figures. Measured values can include error etc. associated with, for example, the detection limit of a measuring device.

The devices, software, etc. used for measurement of various values are merely examples. Items that are equivalent to devices etc. that are exemplified may also be used. When equivalent items are used, measurement conditions may be adjusted in accordance with the device.

XPS analysis is performed by the following procedure. A sample powder made of a cathode active material is set in an XPS device. XPS analysis conditions are, for example, as follows.

Analysis device: PHI 5000 VersaProbe III (manufactured by ULVAC-PHI, Inc.)
X-ray source: Al K$\alpha$ radiation
Acceleration voltage: 15 kV
Beam diameter: 100 $\mu$m$\varphi$

The XPS analysis provides analysis results (X-ray photoelectron spectroscopy spectrum) for all elements contained in the cathode active material. In the X-ray photoelectron spectroscopy spectrum, the horizontal axis represents binding energy (eV) and the vertical axis represents spectral intensity (the number of X-ray photoelectrons). In a Cs1 spectrum (280 eV to 296 eV) that is the X-ray photoelectron spectroscopy spectrum, a peak near 292.0 eV corresponds to a $CF_3$ group, a peak near 288.0 eV corresponds to a C=O bond, a peak near 286.5 eV corresponds to a C-O-H bond and a C-O-C bond, and a peak near 285.0 eV corresponds to a C-H bond and a C-C bond.

The chemical composition of a compound can be measured by inductively coupled plasma atomic emission spectroscopy (ICP-AES). A sample solution is prepared by dissolving 0.1 g of the sample (e.g., a cathode active material) in a mixed acid (10 ml) of hydrochloric acid and sulfuric acid. The sample solution is then diluted to an appropriate concentration using a volumetric flask. After dilution, composition analysis is performed using an ICP-AES device. For example, product name "PS3520UVDDII (manufactured by Hitachi High-Tech Science Corporation)" may be used.

"D50" indicates the particle size at which a cumulative value becomes 50% in a volume-based particle size distribution (cumulative distribution). D50 (excluding the D50 of a primary particle) can be measured by, for example, a laser diffraction particle size distribution measuring device.

The "maximum Feret diameter" refers to the length of the long side of a circumscribing quadrangle (rectangle or square) of a particle. When the circumscribing quadrangle is a square, the length of the long side indicates the length of one side.

A stoichiometric formula represents a representative composition of a compound. The compound may have a non-stoichiometric composition. For example, "$Al_2O_3$" is not limited to compounds having a mole ratio of "Al/O = 2/3." Unless otherwise specified, "$Al_2O_3$" refers to compounds containing Al and O in any mole ratio. For example, the compound may be doped with a trace element. Al and O may be partially substituted with another element.

A "derivative" refers to a compound in which part of a parent compound has been modified by at least one method selected from the group consisting of introduction of a functional group, substitution of an atom, oxidation, reduction, and other chemical reactions. The modification may be made at one site or at a plurality of sites. A "substituent" may include, for example, at least one selected from the group consisting of an alkyl group, an alkenyl group, an alkynyl group, a cycloalkyl group, an unsaturated cycloalkyl group, an aromatic group, a heterocyclic group, a halogen atom (F, Cl, Br, I, etc.), an OH group, a SH group, a CN group, a SCN group, an OCN group, a nitro group, an alkoxy group, an unsaturated alkoxy group, an amino group, an alkylamino group, a dialkylamino group, an aryloxy group, an acyl group, an alkoxycarbonyl group, an acyloxy group, an aryloxycarbonyl group, an acylamino group, an alkoxycarbonylamino group, an aryloxycarbonylamino group, a sulfonylamino group, a sulfamoyl group, a carbamoyl group, an alkylthio group, an arylthio group, a sulfonyl group, a sulfinyl group, a ureido group, a phosphoric acid amide group, a sulfo group, a carboxy group, a hydroxamic acid group, a sulfino group, a hydrazino group, an imino group, and a silyl group. These substituents may further be substituted. When there are two or more substituents, the substituents may be the same or different. A plurality of substituents may be bonded to each other to form a ring.

Cathode Active Material

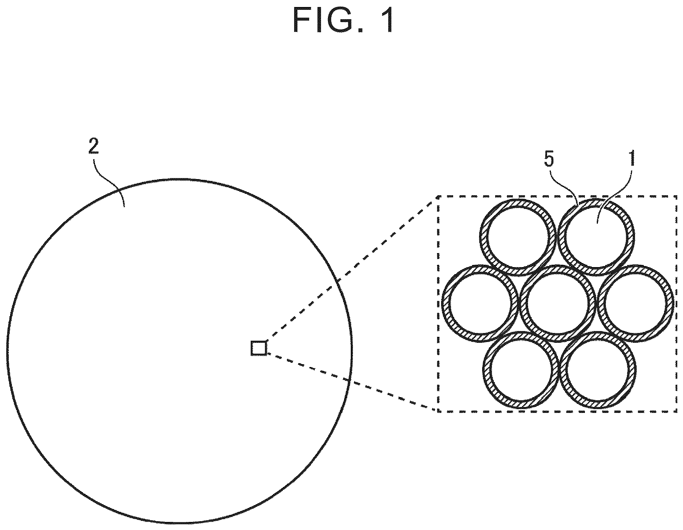

FIG. 1 is a conceptual diagram showing a secondary particle according to the present embodiment. The cathode active material includes primary particles 1 and coatings 5. The "primary particle 1" is the smallest unit of a particle. The primary particles 1 may be present alone without being aggregated. The primary particle 1 that is present alone is also referred to as "single particle." The primary particles 1 may form a secondary particle 2. The cathode active material may be, for example, a powder of the secondary particles 2. The D50 of the cathode active material may be, for example, 5 $\mu$m or more, 10 $\mu$m or more, 15 $\mu$m or more, or 20 $\mu$m or more. The D50 of the cathode active material may be, for example, 30 $\mu$m or less, 25 $\mu$m or less, 20 $\mu$m or less, 15 $\mu$m or less, or 10 $\mu$m or less.

The secondary particle 2 is an aggregate of the primary particles 1. The secondary particle 2 may have any shape. The secondary particle 2 may have, for example, a spherical shape, a rod shape, or an angular shape. The spherical secondary particle 2 is expected to improve, for example, filling properties. The sphericity of the secondary particle 2 may be, for example, 0.85 or more, 0.90 or more, or 0.95 or more. The sphericity of the secondary particle 2 may be, for example, 1 or less, 0.95 or less, or 0.90 or less. The "sphericity" refers to the circularity in a scanning electron microscope (SEM) image (two-dimensional image). The sphericity (circularity) is determined by the following expression.

$$\psi = 4\pi S/L^2$$

$\psi$: sphericity (circularity)
$\pi$: circle ratio
S: sectional area of secondary particle 2 (area of region surrounded by outline of secondary particle 2)
L: perimeter of secondary particle 2 (length of outline of secondary particle 2)

The sphericity is an arithmetic average of 30 secondary particles 2.

The primary particle 1 may have any shape. The primary particle 1 may have, for example, a spherical shape, a rod shape, or an angular shape. The maximum Feret diameter of the primary particle 1 may be, for example, 10 nm to 90 nm. The maximum Feret diameter of the primary particle 1 may be, for example, 20 nm or more, 30 nm or more, 40 nm or more, 50 nm or more, 60 nm or more, 70 nm or more, or 80 nm or more. The maximum Feret diameter of the primary particle 1 may be, for example, 80 nm or less, or 60 nm or less. The maximum Feret diameter of the primary particle 1 is an arithmetic average of 30 primary particles 1.

The coating 5 contains carbon. The bonding state of carbon elements in the coating 5 is not limited. The coating 5 covers at least part of the surface of the primary particle 1. The coating 5 may cover the entire surface of the primary particle 1.

The thickness of the coating 5 may be, for example, 1 nm or more, 2 nm or more, 3 nm or more, 4 nm or more, or 5 nm or more. The thickness of the coating 5 may be, for example, 10 nm or less, 9 nm or less, 8 nm or less, 7 nm or less, 6 nm or less, or 5 nm or less.

The mass fraction of the coating 5 may be 0.1% or more, 0.5% or more, 1% or more, 2% or more, 3% or more, or 4% or more with respect to the mass of the cathode active material (olivine phosphate compound). The mass fraction of the coating 5 may be 5% or less, 4% or less, or 3% or less with respect to the mass of the cathode active material.

The primary particle 1 contains the olivine phosphate compound. "Olivine" refers to a crystal structure belonging to the space group Pnma. The space group is identified by powder X-ray diffraction (XRD) measurement. The primary particle 1 may be, for example, a single-phase compound. As long as the primary particle 1 contains the olivine crystal phase, it may further contain a phase belonging to another space group. The primary particle 1 may further contain, for example, an amorphous phase.

A $CF_3$ group is detected by XPS for the cathode active material. That is, the coating 5 contains carbon, and the carbon is present as at least the $CF_3$ group. In the coating 5, carbon may be present in the form of a C=O bond, a C-O-H bond, a C-O-C bond, a C-H bond, or a C-C bond. In the Cs1 spectrum (binding energy of 280 eV to 296 eV) obtained by XPS, when the intensity of a peak corresponding to the trifluoromethyl group ($CF_3$ group) (near binding energy of 292.0 eV) is $I(CF_3)$ and the intensity of a peak corresponding to the C-H bond and the C-C bond (near binding energy of 285.0 eV) is I(C), a relationship of the following formula (1) is preferably satisfied:

$$0.01 \leq I(CF_3)/I(C) \ldots (1)$$

In "$I(CF_3)/I(C)$" in the above formula (1), the amount of carbon present as the $CF_3$ group in the carbon present in the coating 5 is reflected in $I(CF_3)$, and the amount of carbon present as the C-H bond or the C-C bond is reflected in I(C). That is, "$I(CF_3)/I(C)$" can be used as an indicator of the proportion of the amount of carbon (C) present as the trifluoromethyl group ($CF_3$ group) in the carbon (C) present in the coating 5. For example, when part of the C-O-H groups are modified into C-O-CO-$CF_3$ groups and the states before and after the modification are compared, there is no difference in I(C) value but the $I(CF_3)$ value increases and "$I(CF_3)/I(C)$" increases. For example, when part of C-O-H is modified into C-O-CO-$CF_3$, the increase in "$I(CF_3)/I(C)$" can mean a decrease in the proportion of the amount of carbon present as C-O-H. The small proportion of the amount of carbon present as C-O-H means a decrease in OH groups. The OH group has a function of adsorbing a water molecule, and the water molecule adsorbed to the OH group may cause deterioration of the cathode active material. "$I(CF_3)/I(C)$" may be 0.02 or more. Further, "$I(CF_3)/I(C)$" may be 0.3 or less, 0.2 or less, or 0.1 or less.

By satisfying the relationship of the above formula (1), part of the carbon present in the coating 5 is present as the $CF_3$ group, or the proportion of carbon present as C-O-H is small. Thus, the deterioration of the cathode active material can be suppressed. By using such a cathode active material in a battery, improvement in capacity retention rate of the battery can be expected.

The adsorbed water amount when the cathode active material is left standing for 24 hours in an environment at a temperature of 23°C and a relative humidity of 50% after sufficient drying is preferably 1900 ppm or less. The adsorbed water amount is a value calculated by measurement using the Karl Fischer method. Satisfying the relationship of the above formula (1) can be an indicator of a small number of OH groups present on the surface of the coating 5. Thus, reduction in adsorbed water amount in the cathode active material in the battery and, furthermore, suppression of the deterioration of the cathode active material are expected. The adsorbed water amount may be, for example, 1000 ppm or less, 900 ppm or less, 800 ppm or less, or 700 ppm or less. The adsorbed water amount may be, for example, 1 ppm or more, 10 ppm or more, or 100 ppm or more.

The olivine phosphate compound may include at least one selected from the group consisting of lithium manganese iron phosphate (LMFP), lithium manganese phosphate (LMP), and lithium iron phosphate (LFP). The olivine phosphate compound may have, for example, a composition represented by the following general formula.

$$Li_{1-a}Mn_{1-x}Fe_xPO_4$$

For example, a relationship of "$-0.5 \leq a \leq 0.5$" may be satisfied. For example, x may be 0 or more, 0.05 or more, 0.1 or more, 0.2 or more, 0.3 or more, 0.4 or more, 0.5 or more, 0.6 or more, 0.7 or more, 0.8 or more, or 0.9 or more. For example, x may be 1 or less, less than 1, 0.9 or less, 0.8 or less, 0.7 or less, 0.6 or less, 0.5 or less, 0.4 or less, 0.3 or less, 0.2 or less, or 0.1 or less.

LMFP, LMP, and LFP may be doped with an element (dopant) other than lithium (Li), Mn, Fe, phosphorus (P), and oxygen (O). The doping amount (substance amount fraction with respect to the substance amount of Li) may be, for example, 0.01 to 0.1. The dopant may include, for example, at least one selected from the group consisting of boron (B), nitrogen (N), halogens, silicon (Si), sodium (Na), Mg, aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), Sr, yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), and actinides.

The cathode active material may contain at least one selected from the group consisting of LMFP, LMP, and LFP as a main component, and may further contain other components. The other components may include, for example, lithium nickel composite oxide (LNO), lithium cobalt composite oxide (LCO), or lithium manganese composite oxide (LMO). When the cathode active material contains LMFP, the mixing ratio (mass ratio) of LMFP to the other components may be, for example, "LMFP/other components = 9/1 to 1/9," "LMFP/other components = 8/2 to 2/8," "LMFP/other components = 7/3 to 3/7," or "LMFP/other components = 6/4 to 4/6." The cathode active material may be, for example, a mixture of a LMFP powder and powders of the other components.

LMP may have, for example, a composition represented by a general formula "$Li_{1-a}MnPO_4$ ($-0.5 \leq a \leq 0.5$)." LFP may have, for example, a composition represented by a general formula "$Li_{1-a}FePO_4$ ($-0.5 \leq a \leq 0.5$)."

LNO may have, for example, a crystal structure belonging to the space group R-3m. LNO may have, for example, a composition represented by the following general formula.

$$Li_{1-a}Ni_xM_{1-x}O_2$$

In the formula, relationships of $-0.5 \le a \le 0.5$ and $0 \le x \le 1$ are satisfied. For example, M may include at least one selected from the group consisting of Co, Mn, and Al. For example, a relationship of $0 < x \le 0.1$, $0.1 \le x \le 0.2$, $0.2 \le x \le 0.3$, $0.3 \le x \le 0.4$, $0.4 \le x \le 0.5$, $0.5 \le x \le 0.6$, $0.6 \le x \le 0.7$, $0.7 \le x \le 0.8$, $0.8 \le x \le 0.9$, or $0.9 \le x \le 1$ may be satisfied. For example, a relationship of $-0.4 \le a \le 0.4$, $-0.3 \le a \le 0.3$, $-0.2 \le a \le 0.2$, or $-0.1 \le a \le 0.1$ may be satisfied.

LNO may include, for example, at least one selected from the group consisting of $LiNi_{0.9}Co_{0.1}O_2$, $LiNi_{0.9}Mn_{0.1}O_2$, and $LiNiO_2$.

LNO may be represented by, for example, the following general formula. The compound represented by the following general formula may also be referred to as "NCM."

$$Li_{1-2}Ni_xCo_yMn_zO_2$$

In the formula, relationships of $-0.5 \le a \le 0.5$, $0 < x < 1$, $0 < y < 1$, $0 < z < 1$, and $x + y + z = 1$ are satisfied. For example, a relationship of $0 < x \le 0.1$, $0.1 \le x \le 0.2$, $0.2 \le x \le 0.3$, $0.3 \le x \le 0.4$, $0.4 \le x \le 0.5$, $0.5 \le x \le 0.6$, $0.6 \le x \le 0.7$, $0.7 \le x \le 0.8$, $0.8 \le x \le 0.9$, or $0.9 \le x < 1$ may be satisfied. For example, a relationship of $0 < y \le 0.1$, $0.1 \le y \le 0.2$, $0.2 \le y \le 0.3$, $0.3 \le y \le 0.4$, $0.4 \le y \le 0.5$, $0.5 \le y \le 0.6$, $0.6 \le y \le 0.7$, $0.7 \le y \le 0.8$, $0.8 \le y \le 0.9$, or $0.9 \le y < 1$ may be satisfied. For example, a relationship of $0 < z \le 0.1$, $0.1 \le z \le 0.2$, $0.2 \le z \le 0.3$, $0.3 \le z \le 0.4$, $0.4 \le z \le 0.5$, $0.5 \le z \le 0.6$, $0.6 \le z \le 0.7$, $0.7 \le z \le 0.8$, $0.8 \le z \le 0.9$, or $0.9 \le z < 1$ may be satisfied.

NCM may include, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

LNO may be represented by, for example, the following general formula. The compound represented by the following general formula may also be referred to as "NCA."

$$Li_{1-a}Ni_xCo_yAl_zO_2$$

In the formula, relationships of $-0.5 \le a \le 0.5$, $0 < x < 1$, $0 < y < 1$, $0 < z < 1$, and $x + y + z = 1$ are satisfied. For example, a relationship of $0 < x \le 0.1$, $0.1 \le x \le 0.2$, $0.2 \le x \le 0.3$, $0.3 \le x \le 0.4$, $0.4 \le x \le 0.5$, $0.5 \le x \le 0.6$, $0.6 \le x \le 0.7$, $0.7 \le x \le 0.8$, $0.8 \le x \le 0.9$, or $0.9 \le x < 1$ may be satisfied. For example, a relationship of $0 < y \le 0.1$, $0.1 \le y \le 0.2$, $0.2 \le y \le 0.3$, $0.3 \le y \le 0.4$, $0.4 \le y \le 0.5$, $0.5 \le y \le 0.6$, $0.6 \le y \le 0.7$, $0.7 \le y \le 0.8$, $0.8 \le y \le 0.9$, or $0.9 \le y < 1$ may be satisfied. For example, a relationship of $0 < z \le 0.1$, $0.1 \le z \le 0.2$, $0.2 \le z \le 0.3$, $0.3 \le z \le 0.4$, $0.4 \le z \le 0.5$, $0.5 \le z \le 0.6$, $0.6 \le z \le 0.7$, $0.7 \le z \le 0.8$, $0.8 \le z \le 0.9$, or $0.9 \le z < 1$ may be satisfied.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

Method for Producing Cathode Active Material

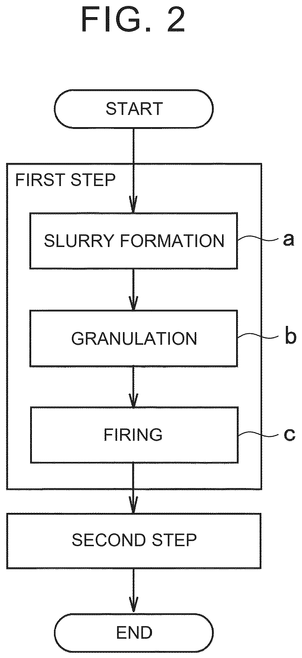

FIG. 2 is a schematic flowchart showing a method for producing a cathode active material according to the present embodiment. Hereinafter, the "method for producing a cathode active material according to the present embodiment" may be abbreviated to "present method." The method for producing a cathode active material according to the present embodiment may include a first step and a second step. The first step may include, for example, "a. slurry formation," "b. granulation," and "c. firing."

First Step

a. Slurry Formation

The present method may include, for example, forming a slurry by mixing a lithium compound, a manganese compound, an iron compound, a phosphate compound, a carbon source, and a solvent. For example, the lithium compound, the manganese compound, the phosphate compound, and the iron compound may be weighed to achieve a composition ratio (mole ratio) represented by the composition formula "$Li_{1-a}Mn_{1-x}Fe_xPO_4$ ($-0.5 \le a \le 0.5$, $0 \le x \le 1$)." The lithium compound may include, for example, lithium carbonate or lithium hydroxide. The manganese compound may include, for example, manganese carbonate. The phosphate compound may include, for example, phosphoric acid or lithium dihydrogen phosphate. The iron compound may include, for example, iron oxalate or ferric phosphate.

The carbon source is the source of carbon that adheres to the surface of the primary particle. The carbon source may include, for example, sugars or organic acids. The carbon source may include, for example, glucose, sucrose, fructose, citric acid, or lactic acid. The carbon source may include, for example, sugars. The addition amount of the carbon source may be, for example, 1% to 20% by mass with respect to the raw material mixture. The carbon source may be added after granules are formed using a raw material mixture of other raw materials. In this case, the addition amount of the carbon source may be, for example, 1% to 20% by mass with respect to the granules.

The solvent may include, for example, water. The solid content concentration of the slurry may be, for example, 20% to 40% by mass.

The particle size in the slurry may be adjusted by performing wet milling. For example, the wet milling may be performed such that the D50 is 0.10 $\mu$m to 1 $\mu$m.

b. Granulation

The present method may include obtaining secondary particles by granulation using, for example, drying of the slurry. For example, the secondary particles may be obtained by granulation using a spray drying method. The secondary particles formed by the granulation operation are also referred to as "granules." That is, the secondary particles may be rephrased as "granules."

c. Firing

The present method may include producing an olivine phosphate compound by subjecting the secondary particles to heat treatment. Any heat treatment furnace (e.g., an electric furnace or a muffle furnace) can be used. The heat treatment atmosphere may be, for example, an inert atmosphere. The inert atmosphere may be, for example, a nitrogen atmosphere. The heat treatment temperature may be, for example, 400°C to 700°C. The heat treatment time may be, for example, 1 hour to 6 hours.

The obtained olivine phosphate compound will be referred to as "precursor particles." The precursor particle includes a primary particle and a carbon layer. The primary particle contains the olivine phosphate compound. The carbon layer covers at least part of the surface of the primary particle. The carbon layer contains carbon. There are no limitations on the bonding state of carbon contained in the carbon layer with other elements, but the carbon layer preferably contains carbon in the form of a C-O-H bond. That is, the carbon layer preferably includes a hydroxyl group.

Second Step

In the second step, a cathode active material is produced by causing the precursor particles prepared in the first step to react with a trifluoromethyl source. This step involves a reaction in which the hydroxyl group contained in the carbon layer of the precursor particle is modified with the trifluoromethyl source. The trifluoromethyl source is not limited as long as it contains a trifluoromethyl group, and may also contain a trifluoroacetyl group. The trifluoromethyl source includes, for example, trifluoroacetic acid or trifluoroacetic anhydride. The second step may be, for example, a method in which the precursor particles and the trifluoroacetic acid are exposed to a heated environment to cause the vaporized trifluoroacetic acid to react with the precursor particles.

Through the second step, the trifluoromethyl group can be introduced into the carbon layer. Through the second step, the number of hydroxyl groups contained in the carbon layer can be reduced. When the carbon layer contains hydroxyl groups as C-O-H groups, at least part of them can be modified with the trifluoromethyl group into a C-O-CO-CF$_3$ group.

After the second step, the obtained cathode active material may be subjected to a drying step. Through the drying step, an excess trifluoromethyl source can be evaporated and removed. The drying temperature may be any temperature at which the trifluoromethyl source used is evaporated, and may be, for example, 70°C or more, 80°C or more, 90°C or more, or 100°C or more and 200°C or less, 150°C or less, or 120°C or less. When trifluoroacetic acid (boiling point: 72.4°C) is used as the trifluoromethyl source, the temperature is preferably 72.4°C or more. The drying step may be performed by drying under reduced pressure. In this manner, the cathode active material including the primary particles and the coatings is produced. The coating includes the trifluoromethyl group.

In the above production method, the content of the trifluoromethyl group in the coating of the cathode active material obtained in the second step is larger than the content of the trifluoromethyl group in the carbon layer of the precursor particle obtained in the first step.

Battery

In some aspects of the present embodiment, a battery has a monopolar structure. In some aspects of the present embodiment, the battery has a bipolar structure. The battery having the bipolar structure (bipolar battery) will be described as an example.

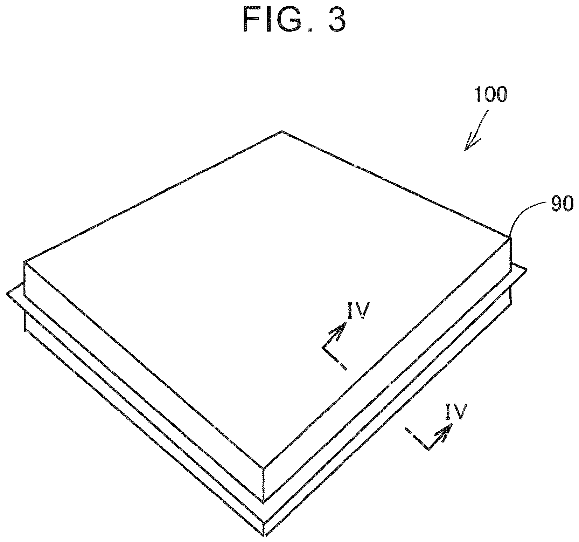

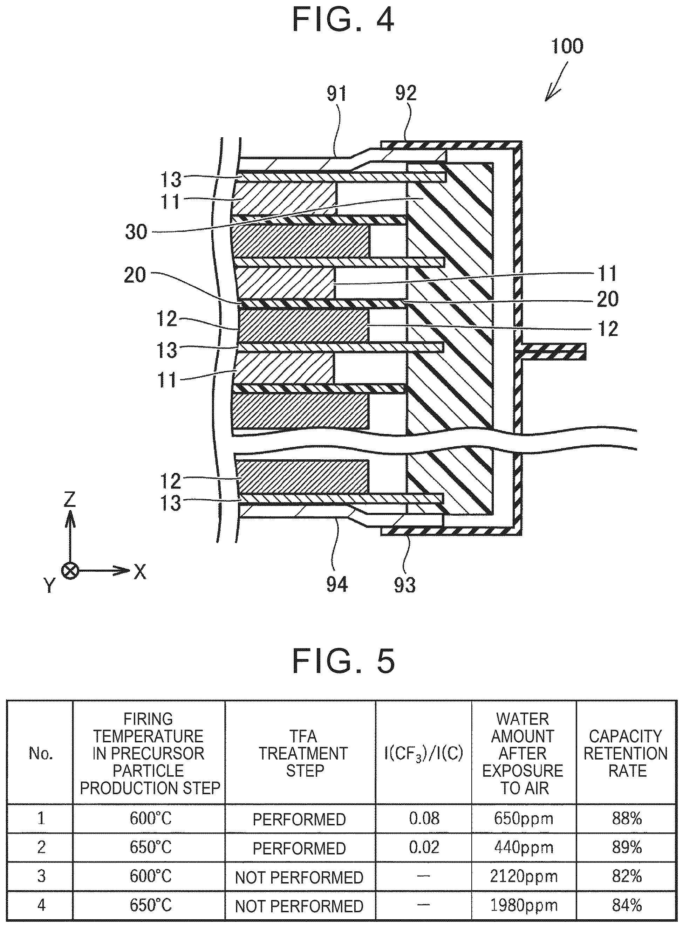

FIG. 3 is a schematic perspective view of the battery according to the present embodiment. FIG. 4 is a schematic sectional view taken along line IV-IV in FIG. 3. Hereinafter, a "surface-perpendicular direction" refers to a direction normal to the surface of a sheet-shaped member (e.g., a foil or an electrode). An "in-plane direction" refers to any direction orthogonal to the surface-perpendicular direction. In FIG. 4, the Z-axis direction corresponds to the surface-perpendicular direction. The X-axis direction and the Y-axis direction are examples of the in-plane direction.

A battery 100 includes an outer casing 90 and a power generating element. The outer casing 90 houses the power generating element. The outer casing 90 may include, for example, a first current collecting plate 91, a first laminate film 92, a second laminate film 93, and a second current collecting plate 94. The first laminate film 92 and the second laminate film 93 are joined to each other at their ends in the in-plane direction. At the joint between the first laminate film 92 and the second laminate film 93, a sealant (not shown) may be interposed between the first laminate film 92 and the second laminate film 93.

The first current collecting plate 91 and the second current collecting plate 94 are joined to the power generating element at their ends in a laminating direction (Z-axis direction). The first laminate film 92 is joined to the first current collecting plate 91. The second laminate film 93 is joined to the second current collecting plate 94. At the joint between the current collecting plate and the laminate film, a sealant (not shown) may be interposed between the current collecting plate and the laminate film.

The power generating element includes a plurality of bipolar electrodes. The bipolar electrodes are laminated in the surface-perpendicular direction (Z-axis direction). Each of the bipolar electrodes includes a cathode layer 11, a current collecting foil 13, and an anode layer 12 in this order in the surface-perpendicular direction. In the in-plane direction (e.g., the X-axis direction), the current collecting foil 13 extends outward of the cathode layer 11 and the anode layer 12. For example, the current collecting foil 13 may extend outward of the cathode layer 11 and the anode layer 12 over the entire circumference in the in-plane directions.

The current collecting foil 13 is a conductor. The current collecting foil 13 may include, for example, a metal foil and a conductive resin layer. For example, the current collecting foil 13 may be formed by bonding an Al foil and a Cu foil together. The surface of the current collecting foil 13 may be coated with a carbon material. The carbon material may include, for example, carbon black.

The power generating element includes a sealant 30. The sealant 30 is joined to the current collecting foil 13 at its end in the in-plane direction. The sealant 30 may be, for example, thermally welded to the current collecting foil 13. For example, the sealant 30 may be disposed over the entire circumference in the in-plane directions. The sealant 30 may include, for example, a resin material. The sealant 30 seals the space between the current collecting foils 13 adjacent to each other in the surface-perpendicular direction. The space between the current collecting foils 13 is sealed with the sealant 30 to define a cell. The cell is the smallest unit of the power generating element. Since the battery 100 includes a plurality of cells, it may also be referred to as "bipolar module." Each of the cells is sealed. The cells are isolated from one another. Each of the cells includes the cathode layer 11, a separator 20, the anode layer 12, and an electrolyte solution.

Cathode Layer

The cathode layer 11 adheres to one surface of the current collecting foil 13. For example, grooves may be formed in the cathode layer 11. The cathode layer 11 may be formed in, for example, a stripe pattern. The cathode layer 11 contains a cathode active material. That is, the electrode contains the cathode active material. Details of the cathode active material are as described above.

The cathode layer 11 may further contain, for example, a conductive material and a binder in addition to the cathode active material. For example, 0.1 parts by mass to 10 parts by mass of the conductive material may be contained with respect to 100 parts by mass of the cathode active material. The conductive material may include any component. The conductive material may include, for example, at least one selected from the group consisting of graphite, acetylene black (AB), Ketjenblack (registered trademark), vapor-grown carbon fibers (VGCF), carbon nanotubes (CNT), and graphene flakes (GF).

For example, 0.1 parts by mass to 10 parts by mass of the binder may be contained with respect to 100 parts by mass of the cathode active material. The binder may include any component. The binder may include, for example, at least one selected from the group consisting of polyvinylidene difluoride (PVdF), polyvinylidene difluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinylpyrrolidone (PVP), polyoxyethylene alkyl ether, and derivatives thereof.

The cathode layer 11 may further contain, for example, an inorganic filler, an organic filler, a solid electrolyte, a surface modifier, a dispersant, a lubricant, a flame retardant, a protectant, a flux, a coupling agent, and an adsorbent. The cathode layer 11 may contain, for example, polyoxyethylene allylphenyl ether phosphate, zeolite, a silane coupling agent, $MoS_2$, or $WO_3$.

Anode Layer

The anode layer 12 adheres to one surface of the current collecting foil 13. The anode layer 12 is disposed on the back side of the cathode layer 11. The anode layer 12 may have a larger area than the cathode layer 11. The anode layer 12 contains an anode active material.

The anode active material may be, for example, in the form of particles or a sheet. The D50 of the anode active material may be, for example, 1 $\mu$m or more, 5 $\mu$m or more, or 10 $\mu$m or more. The D50 of the anode active material may be, for example, 30 $\mu$m or less, 20 $\mu$m or less, 15 $\mu$m or less, or 10 $\mu$m or less.

The anode active material may include any component. The anode active material may include, for example, at least one selected from the group consisting of a carbon-based active material, an alloy-based active material, a Si-C composite material, Li metal, a Li-based alloy, and lithium titanate. In some aspects of the present embodiment, the battery may be a Li metal anode battery.

The carbon-based active material may include, for example, at least one selected from the group consisting of graphite, soft carbon, and hard carbon. "Graphite" is a general term for natural graphite and artificial graphite. The graphite may be a mixture of natural graphite and artificial graphite. The mixing ratio (mass ratio) may be, for example, "natural graphite/artificial graphite = 1/9 to 9/1," "natural graphite/artificial graphite = 2/8 to 8/2," or "natural graphite/artificial graphite = 3/7 to 7/3."

The surface of the graphite may be coated with, for example, amorphous carbon. The surface of the graphite may be coated with, for example, a different material. The different material may include, for example, at least one selected from the group consisting of P, W, Al, and O. The different material may include, for example, at least one selected from the group consisting of $Al(OH)_3$, $AlOOH$, $Al_2O_3$, $WO_3$, $Li_2CO_3$, $LiHCO_3$, and $Li_3PO_4$.

The alloy-based active material may include, for example, at least one selected from the group consisting of Si, Li silicate, SiO, a Si-based alloy, tin (Sn), SnO, and a Sn-based alloy.

SiO may be represented by, for example, the following general formula. $SiO_x$

In the formula, a relationship of $0 < x < 2$ is satisfied. For example, a relationship of $0.5 \leq x \leq 1.5$ or $0.8 \leq x \leq 1.2$ may be satisfied.

"Si-C composite material" refers to a composite material of a carbon-based active material (such as graphite) and an alloy-based active material (such as Si). For example, fine Si particles may be dispersed within carbon particles. For example, fine Si particles may be dispersed within graphite particles. For example, Li silicate particles may be coated with a carbon material (amorphous carbon etc.).

Separator

The separator 20 can separate the cathode layer 11 from the anode layer 12. The separator 20 has electrical insulation properties. The separator 20 may include, for example, at least one selected from the group consisting of a resin film (polymer film), an inorganic particle layer, and an organic particle layer. The separator 20 may include, for example, the resin film and the inorganic particle layer.

The resin film is porous. The resin film may include, for example, a microporous film or a nonwoven fabric. The resin film includes a resin skeleton. The resin skeleton may be continuous, for example, in the form of a net. Pores are formed in the gaps in the resin skeleton. The resin film is permeable to an electrolyte solution. The resin film may have an average pore size of, for example, 1 $\mu$m or less. The resin film may have an average pore size of, for example, 0.01 $\mu$m to 1 $\mu$m, or 0.1 $\mu$m to 0.5 $\mu$m. The "average pore size" can be measured by mercury porosimetry. The Gurley value of the resin film may be, for example, 50 s/100 cm$^3$ to 250 s/100 cm$^3$. The "Gurley value" can be measured by the Gurley test method.

The resin film may include, for example, at least one selected from the group consisting of an olefin resin, a polyurethane resin, a polyamide resin, a cellulose resin, a polyether resin, an acrylic resin, and a polyester resin. The resin film may include, for example, at least one selected from the group consisting of polyethylene (PE), polypropylene (PP), polyamide (PA), polyamideimide (PAI), polyimide (PI), aromatic polyamide (aramid), polyphenylene ether (PPE), and derivatives thereof. The resin film can be formed by, for example, a stretching method or a phase separation method. The thickness of the resin film may be, for example, 5 $\mu$m to 50 $\mu$m, or 10 $\mu$m to 25 $\mu$m.

The resin film may have, for example, a single-layer structure. The resin film may be made of, for example, a PE layer. The skeleton of the PE layer is formed by PE. The PE layer may have a shutdown function. The resin film may have, for example, a multilayer structure. The resin film may include, for example, a PP layer and a PE layer. The skeleton of the PP layer is formed by PP. The resin film may have, for example, a three-layer structure. The resin film may be formed by, for example, laminating a PP layer, a PE layer, and a PP layer in this order. The thickness of the PE layer may be, for example,

5 μm to 20 μm. The thickness of the PP layer may be, for example, 3 μm to 10 μm.

The inorganic particle layer may be formed on the surface of the resin film. The inorganic particle layer may be formed on only one surface of the resin film, or on both surfaces. The inorganic particle layer may be formed on the surface facing the cathode layer 11 or on the surface facing the anode layer 12. The inorganic particle layer may be formed on the surface of the cathode layer 11 or on the surface of the anode layer 12.

The inorganic particle layer is porous. The inorganic particle layer includes inorganic particles. The inorganic particles may also be referred to as "inorganic fillers." Pores are formed in the gaps between the inorganic particles. The thickness of the inorganic particle layer may be, for example, 0.5 μm to 10 μm, or 1 μm to 5 μm. The inorganic particle may contain, for example, a heat-resistant material. The inorganic particle layer containing the heat-resistant material is also referred to as "heat resistance layer (HRL)." The inorganic particle may contain at least one selected from the group consisting of boehmite, alumina, zirconia, titania, magnesia, silica, etc. The inorganic particle may have any shape. The inorganic particle may have, for example, a spherical shape, a rod shape, a plate shape, or a fibrous shape. The D50 of the inorganic particle may be, for example, 0.1 μm to 10 μm, or 0.5 μm to 3 μm. The inorganic particle layer may further contain a binder. The binder may include, for example, at least one selected from the group consisting of an acrylic resin, a polyamide resin, a fluorine resin, an aromatic polyether resin, and a liquid crystal polyester resin.

The separator 20 may include, for example, the organic particle layer. The separator 20 may include, for example, the organic particle layer instead of the resin film. The separator 20 may include, for example, the organic particle layer instead of the inorganic particle layer. The separator 20 may include both the resin film and the organic particle layer. The separator 20 may include both the inorganic particle layer and the organic particle layer. The separator 20 may include the resin film, the inorganic particle layer, and the organic particle layer.

The thickness of the organic particle layer may be, for example, 0.1 μm to 50 μm, 0.5 μm to 20 μm, 0.5 μm to 10 μm, or 1 μm to 5 μm. The organic particle layer includes organic particles. The organic particles may also be referred to as "organic fillers." The organic particle may contain a heat-resistant material. The organic particle may contain, for example, at least one selected from the group consisting of PE, PP, PTFE, PI, PAI, PA, and aramid. The organic particle may have, for example, a spherical shape, a rod shape, a plate shape, or a fibrous shape. The D50 of the organic particle may be, for example, 0.1 μm to 10 μm, or 0.5 μm to 3 μm.

The separator 20 may include, for example, a mixed layer. The mixed layer includes both inorganic and organic particles.

Electrolyte Solution

The electrolyte solution is a liquid electrolyte. The electrolyte solution contains a solute and a solvent. The concentration of the solute may be, for example, 0.5 mol/L to 1 mol/L, 1 mol/L to 1.5 mol/L, 1.5 mol/L to 2 mol/L, 2 mol/L to 2.5 mol/L, or 2.5 mol/L to 3 mol/L. The unit "mol/L" may also be written as "M." The solute includes a supporting salt (Li salt). The solute may include, for example, an inorganic acid salt, an imide salt, an oxalate complex, or a halide. The solute may include, for example, at least one selected from the group consisting of $LiPF_6$, $LiBF_4$, $LiClO_4$, $LiAsF_6$, $LiSbF_6$, $LiN(SO_2F)_2$ "LiFSI," $LiN(SO_2CF_3)_2$ "LiTFSI," $LiB(C_2O_4)_2$ "LiBOB," $LiBF_2(C_2O_4)$ "LiDFOB," $LiPF_2(C_2O_4)_2$ "LiDFOP," $LiPO_2F_2$, $FSO_3Li$, LiI, LiBr, and derivatives thereof.

The electrolyte solution may contain, for example, a carbonate solvent (carbonate ester solvent). The solvent may include, for example, a cyclic carbonate, a chain carbonate, or a fluorinated carbonate. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may include a cyclic carbonate (EC, PC, FEC, etc.) and a chain carbonate (EMC, DMC, DEC, etc.). The mixing ratio (volume ratio) of the cyclic carbonate to the chain carbonate may be, for example, "cyclic carbonate/chain carbonate = 1/9 to 4/6," "cyclic carbonate/chain carbonate = 2/8 to 3/7," or "cyclic carbonate/chain carbonate = 3/7 to 4/6."

The solvent may include a cyclic carbonate (EC, PC, etc.) and a fluorinated cyclic carbonate (FEC etc.). The mixing ratio (volume ratio) of the cyclic carbonate to the fluorinated cyclic carbonate may be, for example, "cyclic carbonate/fluorinated cyclic carbonate = 99/1 to 90/10," "cyclic carbonate/fluorinated cyclic carbonate = 9/1 to 1/9," "cyclic carbonate/fluorinated cyclic carbonate = 9/1 to 7/3," or "cyclic carbonate/fluorinated cyclic carbonate = 3/7 to 1/9."

The solvent may include, for example, EC, FEC, EMC, DMC, and DEC. The volume ratio of each component may satisfy a relationship represented by, for example, the following formula.

$$V_{EC} + V_{FEC} + V_{EMC} + V_{DMC} + V_{DEC} = 10$$

In the above formula, $V_{EC}$, $V_{FEC}$, $V_{EMC}$, $V_{DMC}$, and $V_{DEC}$ represent the volume ratios of EC, FEC, EMC, DMC, and DEC, respectively.

The following relationships are satisfied: $1 \leq V_{EC} \leq 4$, $0 \leq V_{FEC} \leq 3$, $V_{EC} + V_{FEC} \leq 4$, $0 \leq V_{EMC} \leq 9$, $0 \leq V_{DMC} \leq 9$, $0 \leq V_{DEC} \leq 9$, $6 \leq V_{EMC} + V_{DMC} + V_{DEC} \leq 9$.

For example, a relationship of $1 \leq V_{EC} \leq 2$ or $2 \leq V_{EC} \leq 3$ may be satisfied.

For example, a relationship of $1 \leq V_{FEC} \leq 2$ or $2 \leq V_{FEC} \leq 4$ may be satisfied.

For example, a relationship of $3 \leq V_{EMC} \leq 4$ or $6 \leq V_{EMC} \leq 8$ may be satisfied.

For example, a relationship of $3 \leq V_{DMC} \leq 4$ or $6 \leq V_{DMC} \leq 8$ may be satisfied.

For example, a relationship of $3 \leq V_{DEC} \leq 4$ or $6 \leq V_{DEC} \leq 8$ may be satisfied.

The solvent may have a composition in volume ratios of, for example, "EC/EMC = 3/7," "EC/DMC = 3/7," "EC/FEC/DEC = 1/2/7," "EC/DMC/EMC = 3/4/3," "EC/DMC/EMC = 3/3/4," "EC/FEC/DMC/EMC = 2/1/4/3," "EC/FEC/DMC/EMC = 1/2/4/3," "EC/FEC/DMC/EMC = 2/1/3/4," or "EC/FEC/DMC/EMC = 1/2/3/4."

The electrolyte solution may contain an ether-based solvent. The electrolyte solution may contain, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives thereof.

The electrolyte solution may contain any additive. The addition amount (mass fraction with respect to the entire electrolyte solution) may be, for example, 0.01% to 5%, 0.05% to 3%, or 0.1% to 1%. The additive may include, for example, a solid electrolyte interphase (SEI) formation promoter, an SEI formation inhibitor, a gas generating agent, an overcharge inhibitor, a flame retardant, an antioxidant, an electrode protectant, or a surfactant.

The additive may include, for example, at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), $\gamma$-butyrolactone, a phosphazene compound, a carboxylic acid ester (e.g., methyl formate (MF), methyl acetate (MA), methyl propionate (MP), or diethyl malonate (DEM)), a fluorobenzene (e.g., monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, or hexafluorobenzene), a fluorotoluene (e.g., 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, or octafluorotoluene), a benzotrifluoride (e.g., benzotrifluoride, 2-fluorobenzotrifluoride, 3-fluorobenzotrifluoride, 4-fluorobenzotrifluoride, 2-methylbenzotrifluoride, 3-methylbenzotrifluoride, or 4-methylbenzotrifluoride), a fluoroxylene (e.g., 3-fluoro-o-xylene, 4-fluoro-o-xylene, 2-fluoro-m-xylene, or 5-fluoro-m-xylene), a sulfur-containing heterocyclic compound (e.g., benzothiazole, 2-methylbenzothiazole, or tetrathiafulvalene), a nitrile compound (e.g., adiponitrile or succinonitrile), a phosphate ester (e.g., trimethyl phosphate or triethyl phosphate), a carboxylic acid anhydride (e.g., acetic anhydride, propionic anhydride, oxalic anhydride, succinic anhydride, maleic anhydride, phthalic anhydride, or benzoic anhydride), an alcohol (e.g., methanol, ethanol, n-propyl alcohol, ethylene glycol, or diethylene glycol monomethyl ether), and derivatives thereof.

The components described above as the solute and the solvent may be used as trace components (additives). The additives may include, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives thereof.

The electrolyte solution may include an ionic liquid. The ionic liquid may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives thereof.

In some aspects of the present embodiment, the battery may include a gel electrolyte. That is, the battery may be a polymer battery. The gel electrolyte may contain an electrolyte solution and a polymer material. The polymer material may form a polymer matrix. The polymer material may include, for example, at least one selected from the group consisting of PVdF, PVdF-HFP, polyacrylonitrile (PAN), PVdF-PAN, polyethylene oxide (PEO), polyethylene glycol (PEG), and derivatives thereof.

Production of Cathode Active Material

No. 1

First Step

The first step is a precursor particle production step. Lithium carbonate, manganese carbonate, iron oxalate, and phosphoric acid were weighed to achieve the composition ratio represented by the composition formula "$Li_1Mn_{0.8}Fe_{0.2}PO_4$." These raw materials were dispersed in water to form a slurry, which was then pulverized in a bead mill using beads each having a diameter of 0.3 mm at a peripheral speed of 10 m/sec for 30 minutes, and then fired to obtain granules. Fructose was added to the granules in an amount of 10% by mass. After drying, this prepared liquid was heated to a firing temperature of 600°C at a temperature rising rate of 5°C/min in an inert atmosphere, held for 1 hour, and then cooled to room temperature to obtain precursor particles.

Second Step

The second step is a trifluoroacetic acid treatment step. The precursor particles obtained in the first step were spread on a petri dish, trifluoroacetic acid (TFA) was placed in a small container (made of a fluorine resin (PFA)), and the petri dish and the container containing TFA were placed in the same jar (made of a fluorine resin (PFA)) and sealed. Then, the temperature inside the jar was set to 80°C and maintained for 24 hours. By this treatment, at least part of the hydroxyl groups on the surfaces of the precursor particles were substituted with $CF_3$ groups by the vaporized TFA. The treated precursor particles were collected and dried at 100°C to obtain a cathode active material.

No. 2

A cathode active material was obtained under the same conditions as in No. 1, except that the firing temperature in the precursor particle production step (first step) was set to 650°C.

No. 3

Precursor particles obtained under the same conditions as in the precursor particle production step (first step) of No. 1 without performing the TFA treatment step (second step) of No. 1 were used as a cathode active material.

No. 4

Precursor particles obtained under the same conditions as in the precursor particle production step (first step) of No. 2 without performing the TFA treatment step (second step) of No. 2 were used as a cathode active material.

Measurement

XPS Measurement

Each of the cathode active materials of Nos. 1 to 4 was fixed with carbon tape, and then XPS analysis was performed by the above method to obtain a Cs1 spectrum. Based on the obtained Cs1 spectrum, "I($CF_3$)/I(C)" of each sample was calculated. The calculation results are shown in FIG. 5.

Adsorbed Water Amount Measurement

Each of the cathode active materials of Nos. 1 to 4 was thinly spread on a petri dish and left standing for 24 hours in a standard atmosphere (temperature of 23°C and relative humidity of 50%). Then, the adsorbed water amount was measured using a Karl Fischer moisture meter. The measurement results are shown in FIG. 5.

Battery Characteristics

A lithium ion secondary battery (coin cell) was manufactured. The cell configuration is as follows.
The cathode active material, a conductive material (acetylene black), and a binder (PVdF) were mixed to form a mixture. The mixing ratio (mass ratio) was "cathode active material/conductive material/binder = 92/5/3." The mixture was dispersed in a solvent (N-methyl-2-pyrrolidone) to form a paste. The solid content concentration of the paste was 50% by mass. The paste was applied to the surface of an Al foil and dried to form a cathode layer. The density of the cathode layer was adjusted to 1.8 $g/cm^3$ by roll pressing to form a cathode blank. The cathode blank was subjected to vacuum drying treatment at 120°C for 12 hours. After the drying, a disc sample (diameter: 14 mm) was punched out from the cathode blank.
In a glove box, a coin cell was assembled. The cell configuration is as follows.

Working electrode: disc sample (cathode)
Counter electrode: Li foil
Separator: porous polymer membrane
Electrolyte solution: "EC/DMC = 3/7 (volume ratio)," $LiPF_6$ (1 mol/L)

For the obtained coin cell, 1C was calculated based on the discharge capacity estimated from the application weight. "C" is a symbol indicating the rate (time rate) of current. At a rate of 1C, the theoretical capacity is discharged in one hour. In an environment of 25°C, the charging rate was set to 0.1C, the upper limit voltage was set to 4.3 V, and the charging termination condition was set to 0.01C. After CCCV charging, the 0.1C discharge capacity (referred to as "first discharge capacity") was determined when the discharge termination potential was set to 3 V. Then, the battery was again fully charged and then held at a temperature of 60°C for 14 days. The 0.1C discharge capacity (referred to as "second discharge capacity") was determined again, and the capacity retention rate was calculated as "(second discharge capacity/first discharge capacity) × 100%." The capacity retention rates are shown in FIG. 5. It is believed that the durability is better as the capacity retention rate increases.

Results

As shown in FIG. 5, when the conditions of the present disclosure are satisfied, the capacity retention rate tends to be high. As shown in FIG. 5, when the conditions of the present disclosure are satisfied, the water amount after exposure to the air tends to be low.

**Claims**

1. A cathode active material comprising:

   a primary particle (1); and
   a coating (5), wherein
   the primary particle (1) includes an olivine phosphate compound,
   the coating (5) covers at least part of a surface of the primary particle (1),
   the coating (5) includes carbon, and
   a trifluoromethyl group is detected by X-ray photoelectron spectroscopy.

2. The cathode active material according to claim 1, wherein, in a Cs1 spectrum obtained by the X-ray photoelectron spectroscopy, in a case where an intensity of a peak corresponding to the trifluoromethyl group is $I(CF_3)$ and an intensity of a peak corresponding to a C-C bond and a C-H bond is $I(C)$, a relationship of formula (1) is satisfied $0.01 \leq I(CF_3)/I(C) ... (1)$.

3. The cathode active material according to claim 1, wherein the coating (5) includes the trifluoromethyl group.

4. The cathode active material according to claim 1, wherein an adsorbed water amount in a case where the cathode active material is left standing for 24 hours in an environment at a temperature of 23°C and a relative humidity of 50% is 1900 ppm or less.

5. The cathode active material according to claim 1, wherein a secondary particle (2) is an aggregate of a plurality of the primary particles (1).

6. The cathode active material according to claim 1, wherein the olivine phosphate compound includes at least one selected from the group consisting of lithium manganese iron phosphate, lithium manganese phosphate, and lithium iron phosphate.

7. The cathode active material according to claim 2, wherein the $I(CF_3)/I(C)$ is 0.3 or less.

8. The cathode active material according to claim 7, wherein the $I(CF_3)/I(C)$ is 0.1 or less.

9. The cathode active material according to claim 4, wherein the adsorbed water amount is 1 ppm or more.

10. The cathode active material according to claim 9, wherein the adsorbed water amount is 700 ppm or less.

11. A battery (100) comprising the cathode active material according to any one of claims 1 to 10.

12. The battery (100) according to claim 11, wherein the battery (100) includes a bipolar structure.

13. A method for producing a cathode active material, the method comprising:

preparing a precursor particle; and
producing the cathode active material by causing the precursor particle to react with a trifluoromethyl source, wherein the cathode active material is the cathode active material according to any one of claims 1 to 10.

14. The method for producing the cathode active material according to claim 13, wherein the trifluoromethyl source is trifluoroacetic acid.

# FIG. 1

# FIG. 2

```
          ┌─────────────┐
          │    START    │
          └─────────────┘
                 │
                 ▼
┌────────────────────────────────┐
│ FIRST STEP                     │
│                                │
│     ┌──────────────────┐       │
│     │ SLURRY FORMATION │───── a │
│     └──────────────────┘       │
│                 │              │
│                 ▼              │
│     ┌──────────────────┐       │
│     │   GRANULATION    │───── b │
│     └──────────────────┘       │
│                 │              │
│                 ▼              │
│     ┌──────────────────┐       │
│     │     FIRING       │───── c │
│     └──────────────────┘       │
└────────────────────────────────┘
                 │
                 ▼
       ┌──────────────────┐
       │   SECOND STEP    │
       └──────────────────┘
                 │
                 ▼
          ┌─────────────┐
          │     END     │
          └─────────────┘
```

# FIG. 3

# FIG. 4

# FIG. 5

| No. | FIRING TEMPERATURE IN PRECURSOR PARTICLE PRODUCTION STEP | TFA TREATMENT STEP | I(CF₃)/I(C) | WATER AMOUNT AFTER EXPOSURE TO AIR | CAPACITY RETENTION RATE |
|---|---|---|---|---|---|
| 1 | 600°C | PERFORMED | 0.08 | 650ppm | 88% |
| 2 | 650°C | PERFORMED | 0.02 | 440ppm | 89% |
| 3 | 600°C | NOT PERFORMED | — | 2120ppm | 82% |
| 4 | 650°C | NOT PERFORMED | — | 1980ppm | 84% |

**EUROPEAN SEARCH REPORT**

Application Number

EP 25 21 7657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 644 319 B2 (HYDRO QUEBEC [CA]; TRANSFERT PLUS SEC [CA]) 5 May 2020 (2020-05-05) | 1-6,9-14 | INV. H01M4/36 H01M4/58 |
| A | * column 1, line 24 - line 38 * * column 2, line 44 - column 4, line 16 * * column 4, line 37 - line 44; example 4 * ----- | 7,8 | H01M4/62 H01M4/139 H01M10/0525 |

TECHNICAL FIELDS
SEARCHED      (IPC)

H01M

The present search report has been drawn up for all claims

| Place of search | Date of completion of the search | Examiner |
|---|---|---|
| Munich | 10 April 2026 | Mugnaini, Veronica |

EPO FORM 1503 03.82 (P04C01)

## ANNEX TO THE EUROPEAN SEARCH REPORT
## ON EUROPEAN PATENT APPLICATION NO.

EP 25 21 7657

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2026

| Patent document cited in search report | | Publication date | Patent family member(s) | | Publication date |
|---|---|---|---|---|---|
| US 10644319 | B2 | 05-05-2020 | CA | 2985660 A1 | 01-12-2016 |
| | | | CN | 107851799 A | 27-03-2018 |
| | | | EP | 3304625 A1 | 11-04-2018 |
| | | | ES | 2800060 T3 | 23-12-2020 |
| | | | JP | 6884712 B2 | 09-06-2021 |
| | | | JP | 2018517256 A | 28-06-2018 |
| | | | JP | 2020205288 A | 24-12-2020 |
| | | | KR | 20180014029 A | 07-02-2018 |
| | | | US | 2018138512 A1 | 17-05-2018 |
| | | | WO | 2016187699 A1 | 01-12-2016 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021009838 A